Europäisches Patentamt

(19) European Patent Office

Office européen des brevets

(11) Publication number: **0 162 526**
**A2**

(12) # EUROPEAN PATENT APPLICATION

(21) Application number: **85200789.7**

(22) Date of filing: **17.05.85**

(51) Int. Cl.⁴: **A 23 F 3/16**

(30) Priority: 25.05.84 US 614406

(43) Date of publication of application:
27.11.85 Bulletin 85/48

(84) Designated Contracting States:
BE DE FR GB IT NL

(71) Applicant: THE PROCTER & GAMBLE COMPANY
One Procter & Gamble Plaza
Cincinnati Ohio 45202(US)

(72) Inventor: Tse, Hing-Cheung
2366 Mt. Vernon Drive
Fairfield, OH 45014(US)

(74) Representative: Suslic, Lydia et al,
Procter & Gamble European Technical Center Temselaan
100
B-1820 Strombeek-Bever(BE)

(54) **Liquid tea mix concentrate.**

(57) Reactive antioxidant compounds, able to stabilise organic polymers, contain in their molecule a sterically hindered phenolic group and a hydrolysable silyl function.

In stabilising organic polymers, said reactive antioxidant compounds can be hydrolysed at the silyl function with the formation of silanol groups, which are made to interact in order to form complex resinous stabilising structures. These latter are added in stabilising quantities to the polymer to be stabilised

According to one particular embodiment, the hydrolysis at the silyl function and the formation of the resinous structure take place spontaneously within the polymer to be stabilised

According to a further embodiment, the reactive antioxidant compound is added to the polymer after being stably supported on a solid support by reaction with an inorganic solid having surface hydroxly groups.

According to a further embodiment, the reactive antioxidant compound is made to interact with the polymer so that the stabilising compound becomes chemically bonded to the polymer chains.

In all cases, stabilised polymers are obtained containing the antioxidant compound in a form which is not removable from the polymer.

The processes for preparing the reactive antioxidant compounds and for preparing the stabilised polymer compositions are also described.

Fig. 1

RETENTION TIME (MINUTES)

Croydon Printing Company Ltd

0162526

# LIQUID TEA MIX CONCENTRATE

Hing C. Tse

### Field of the Invention

The present invention comprises a shelf-stable liquid tea mix concentrate, and a tea beverage prepared therefrom.

### Background of the Invention

Tea mix products usually contain a tea extract, sweetener, and an optional flavoring such as lemon. These are most commonly available commercially in the U.S. as granular instant tea mixes, or as ready-to-drink canned products. Liquid tea mix concentrates are sold primarily to foodservice or institutional customers, rather than directly to the consumer. The concentrates, like instant tea, require the addition of water to prepare a tea beverage for consumption.

In liquid tea mix concentrates degradation reactions occur over time between the tea mix components due to the liquid matrix and to the high concentration of the components. These reactions result in the development of off-flavor and malodorous compounds as well as precipitates in the product. After dilution of the concentrate to prepare a tea beverage for consumption, degradation reactions continue to occur.

Those liquid concentrates currently available commercially avoid degradation reactions by omitting tea as a component. A tea essence or tea aromatics are substituted. Since no real tea is present, degradation reactions are limited. Degradation reactions are likewise limited in dry instant tea products due to the dry matrix, but do occur in the tea beverage prepared therefrom.

Most of the liquid tea products commercially available contain preservatives to aid in preventing product degradation. Antimicrobial agents are commonly employed to assure product safety. Antioxidants are used to prevent or retard oxidative decomposition. After an extended period of time these preservatives lose effectiveness and can degrade into other compounds. Except for the use of such additives, most current processes for the preparation of tea products make no provision for the control or

0162526

-2-

prevention of degradation reactions between tea mix components. The prior art addresses primarily degradation in the areas of microbial spoilage and oxidation reactions. Other possible degradation reactions appear to have received little attention.

Several references disclose liquid tea mix concentrates. See, for example, U.S. Patents 1,854,062 of Potter et al., issued April 12, 1932; 2,785,979 of Mitchell et al., issued March 19, 1957; 2,559,194 of Lindsey, issued July 3, 1951; 1,094,675 of Moncrief, issued April 28, 1914; 2,476,072 of Tressler, issued July 12, 1949; 4,235,936 of Kahn et al., issued Nov. 25, 1980; and 2,891,865 of Seltzer et al., issued June 23, 1959. However, these references teach no effective means of preventing the occurrence of degradation reactions in liquid tea mix concentrates. None of these reference concentrates is prepared by a process wherein degradation reactions are forced to occur and the reaction products removed. Thus the level of sulfurous compounds which can contribute to off-flavor and off-aroma development have not been reduced.

Iced tea beverages prepared from currently available commercial tea products are stable for only a short time in the refrigerator. Even with preservatives present, iced tea beverages will become turbid, usually within about one week, because the components interact in degradation reactions to form precipitates. Eventually off-flavors develop. Even the tea-type products that contain no tea develop a certain low level of turbidity and become cloudy in appearance.

It is desirable for consumers to have the convenience of a shelf-stable liquid tea mix concentrate product. Such a product without preservatives which contains real tea would be advantageous. Clearly, it is desirable to have a tea beverage which is stable and does not develop off-flavors and precipitates upon storage in the refrigerator.

Accordingly, it is an object of this invention to provide a shelf-stable liquid tea mix concentrate.

It is a further object of this invention to provide a shelf-stable liquid tea mix concentrate which contains tea without containing preservatives.

It is a further object of this invention to provide a shelf-stable liquid tea mix concentrate which does not develop off-flavors or off-aromas upon storage at room temperature.

It is a further object of this invention to provide a liquid tea mix concentrate from which an iced tea beverage can be prepared that does not develop off-flavors or off-aromas upon storage under refrigeration.

It is a further object of this invention to provide a liquid tea mix concentrate from which an iced tea beverage can be prepared that does not develop turbidity or precipitates upon storage under refrigeration.

## Summary of the Invention

The present invention comprises a liquid tea mix concentrate and tea beverage prepared therefrom. The liquid tea mix concentrate is shelf-stable and substantially free of sulfur. It is characterized by a low pH, low water activity, high total solids, reduced levels of theaflavin and thearubigin, and a polyphenolic profile and molecular weight distribution distinct from other liquid tea mix concentrates. Tea beverage prepared from the concentrate is storage-stable in flavor and clarity. Acid-catalyzed degradation reactions that normally occur between tea mix components causing the development of off-flavor and malodorous sulfurous compounds and precipitates are accelerated during processing. By forcing these components to react and removing the resultant compounds, the development of off-flavors, off-aromas, and precipitates in the resultant liquid tea concentrate is prevented without the use of preservatives.

## Brief Description of the Figures

Figure 1 represents a trace of a gas chromatogram of dehydrated tea extract, citric acid, and distilled water after aging 7 to 10 days at 120°F.

Figure 2 represents a trace of a gas chromatogram of dehydrated tea extract, citric acid, and distilled water, heated at 170°F (77°C) for 2 hours, cooled, and centrifuged to remove precipitates.

Figure 3 is a trace of a gas chromatogram of dehydrated tea extract, citric acid, and distilled water, heated at 170°F (77°C) for 2 hours, vacuum stripped of volatiles, cooled, and centrifuged to remove precipitates.

Figure 4 is a trace of a high pressure liquid chromatogram of the liquid tea mix concentrate of the present invention diluted 1:1 with distilled water.

Figure 5 is a trace of a high pressure liquid chromatogram of a competitive commercially available liquid tea mix concentrate diluted 1:1 with distilled water.

Figure 6 is a trace of a high pressure liquid chromatogram of the undiluted liquid tea mix concentrate of the present invention.

Figure 7 is a trace of a high pressure liquid chromatogram of a 2.9% by weight solution of a dehydrated tea diluted 1:1 with distilled water.

Figure 8 is a trace of a liquid size exclusion chromatogram for the liquid tea mix concentrate of the present invention diluted 1:5 with distilled water.

Figure 9 is a trace of a liquid size exclusion chromatogram for a conventional commercially available liquid tea mix concentrate diluted 1:5 with distilled water.

## Description of Preferred Embodiment

The present invention is a liquid tea mix concentrate comprising tea, water, acid, sweetener, and natural flavors. The present invention also comprises the tea beverage prepared therefrom. The concentrate is shelf stable at ambient temperature and can be stored for long periods of time without degradation of flavor and aroma. The liquid tea mix concentrate is substantially free of sulfur and is characterized by a low pH, low water activity, high total solids, a reduced level of theaflavins and thearubigins, and a polyphenolic profile and molecular weight distribution distinct from other liquid tea mix concentrates. Tea beverage prepared from the concentrate is stable to flavor degradation and physical phase separation when refrigerated.

The term "dehydrated tea extract" is used herein to refer to a pure tea brew which has been dried, such as by spray drying or an equivalent means.

The term "tea mix" is used herein to mean instant tea to which has been added a sweetener, acidulant, and an optional flavoring such as lemon.

The term "liquid concentrate" is used herein to refer to a concentrated tea extract which must be diluted with water prior to consumption.

The term "liquid tea mix concentrate" is used herein to mean a tea extract which has been concentrated and to which has been added a sweetener, acidulant, and an optional flavoring and which must be diluted with water prior to consumption.

The term "granular tea", "powdered tea", or "instant tea" is used herein to mean commercially available dry tea products.

The term "tea beverage" is used herein to refer to one of the above-defined products diluted with water as consumed.

It has now been determined that the degradation reactions which occur in tea mix products resulting in off-flavor and malodorous compounds are acid-catalyzed reactions. Tea mix products commonly contain lemon as a flavoring and citric acid as an acidic component. This explains why use of antioxidants has not been sufficient to prevent product degradation. Oxidation reactions are only one type of degradation reaction. Acid-catalyzed reactions comprise a pathway for flavor and aroma degradation in tea mix products. In the present invention, acid-catalyzed reactions are forced to occur and the reaction products removed, thereby preventing the occurrence of these reactions in the liquid tea mix concentrate.

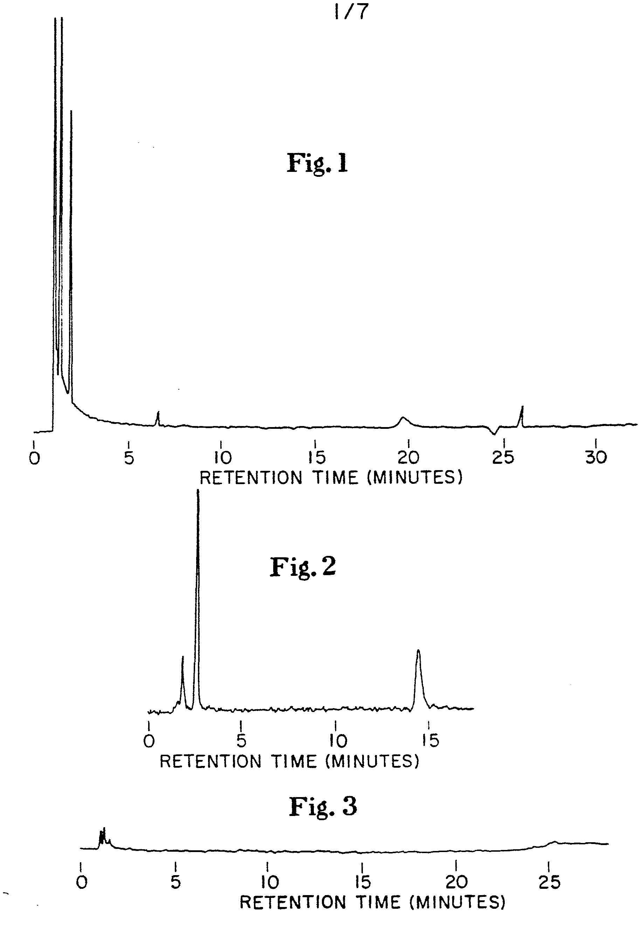

The degradation reactions which occur in liquid tea mix concentrates generate malodorous volatiles and off-flavor compounds and precipitates. This is illustrated by Figures 1 to 3. Figure 1 is a trace of a gas chromatogram of dehydrated tea extract, citric acid and distilled water, aged about 7 to 10 days at 120°F (49°C). The peaks on Figure 1 represent volatile sulfur compounds resulting from degradation reactions which occurred as the product aged. Figure 2 is a trace of a gas chromatogram of dehydrated tea extract, citric acid, and water heated at 170°F (77°C) for about two hours, cooled, and centrifuged to remove precipitates. This figure demonstrates that heating can force the degradation reactions to occur since peaks similar to those of Figure 1 were obtained. It also demonstrates that removal of the precipitates generated is insufficient alone to eliminate the sulfurous compounds. Figure 3 is a trace of a gas chromatogram of dehydrated tea extract, citric acid, and distilled water which was heated at 170°F (77°C) for about 2 hours, heated, vacuum stripped to remove volatiles, cooled, and centrifuged to remove precipitates. This figure demonstrates that vacuum stripping of the treated extract removes the malodorous volatile sulfur compounds resulting from the degradation reactions.

The liquid tea mix concentrate of the present invention is substantially free of sulfur compounds. It has a maximum sulfur content of about 0.005% by weight, preferably less than 0.003% by weight. Conventional liquid tea concentrates and liquid tea mix concentrates have a sulfur content of from about 0.006% to about 0.022% by weight. The lower level of sulfur for the claimed concentrate is due to the removal of these compounds by the treatment of the tea during processing. The tea is acidified and heated to accelerate acid-catalyzed degradation reactions. This causes the formation of these malodorous off-flavor volatile compounds which are then removed. This low level of sulfur greatly enhances the stability of the claimed concentrate. By forcing these components to react, and removing the resultant off-flavor off-aroma volatiles, the development of these off-flavors and aroma as a result of degradation upon aging is prevented in the liquid tea mix concentrate.

The liquid tea mix concentrate of the present invention comprises tea, water, acid, sweetener, and natural flavors. Any suitable tea can be employed but black tea is preferred. The tea can comprise comminuted tea leaves or dehydrated tea extract. When tea leaves are employed, a ratio of tea leaves to water of from about 1:3 to about 1:50 by weight is suitable for use herein. A ratio of tea leaves to water of about 1:10 to 1:30 by weight is preferred. When dehydrated tea extract is employed, from about 0.5% to about 30% by weight is suitable. The tea is present in the final concentrate at a level of from about 0.05% to about 40% by weight. The tea is preferably present at a level of from about 0.1% to about 5% by weight when a natural sweetener is present, and at a level of from about 1% to about 15% by weight if artificial sweetener is present.

Suitable acid components include foodgrade organic or inorganic acids, or combinations of food-compatible organic and inorganic acids. Edible organic acids which can be used herein include fumaric, citric, malic, acetic, lactic, propanoic, adipic, tartaric, succinic, and the like. Edible inorganic acids which can be used herein include phosphoric, carbonic, sodium hydrogen phosphate, and the like. Preferred for use herein are citric, malic, or phosphoric acid. The acid is present in the final concentrate at a level of from about 0.05% to about 40% by weight. The acid is preferably present at a level of from about 0.1% to about 5% by weight when a natural sweetener is present, and at a level of from about 1% to about 15% by weight when artificial sweetener is present.

Suitable sweeteners for use herein include monosaccharides, disaccharides, polysaccharides, or a mixture thereof. In addition, artificial sweeteners such as saccharin, aspartame, and the like, approved for use in foods can be employed. The sweetener comprises from about 0.5% to about 90% by weight of the liquid tea mix concentrate, preferably from about 60% to about 85% by weight if natural sweeteners are employed, and preferably from about 1% to about 10% by weight when an artificial sweetener is employed. Any of a wide variety of natural flavorings can be used herein. Preferred are citrus flavors such as lemon, orange, and the like. The flavorings are used in minor amounts ascertainable by those skilled in the art. The remainder of the composition to make up to 100% by weight comprises water.

The liquid tea mix concentrate of the present invention has a pH below about 3.0, preferably of about 2.5 due to the acid component. The usual pH range for liquid tea concentrates is from about 3.4 to about 5.2. The water activity at 24°C of the liquid tea mix concentrate of the present invention is from about 0.75 to about 0.85, preferably about 0.81. The term "water activity" is used herein in its usual context to mean the ratio of the fugacity of water in the system being studied to the fugacity of pure water at the same temperature. Liquid tea concentrates typically have a water activity at 24°C of from about 0.90 to about 0.97. The claimed liquid tea mix concentrate has a high total solids content of from about 55% to about 95% by weight, preferably from about 60% to about 75% by weight. This combination of a low pH, a low water activity, and a high solids content is an environment that is hostile to microbes. The liquid tea mix concentrate of the present invention does not support and actually can suppress microbial growth. Thus the product is microbiologically stable, even without sterilization or other thermal processing. The shelf stability of the product is advantageous for reasons of both safety and convenience.

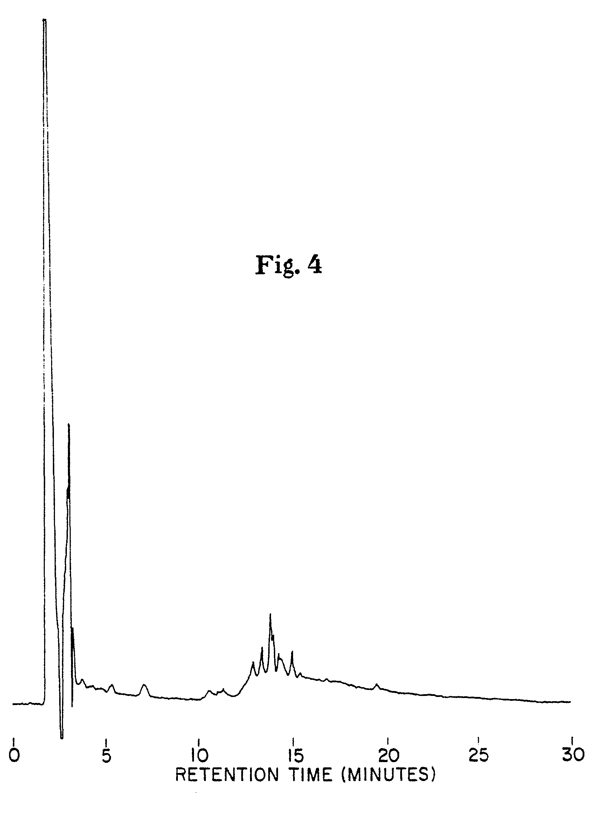

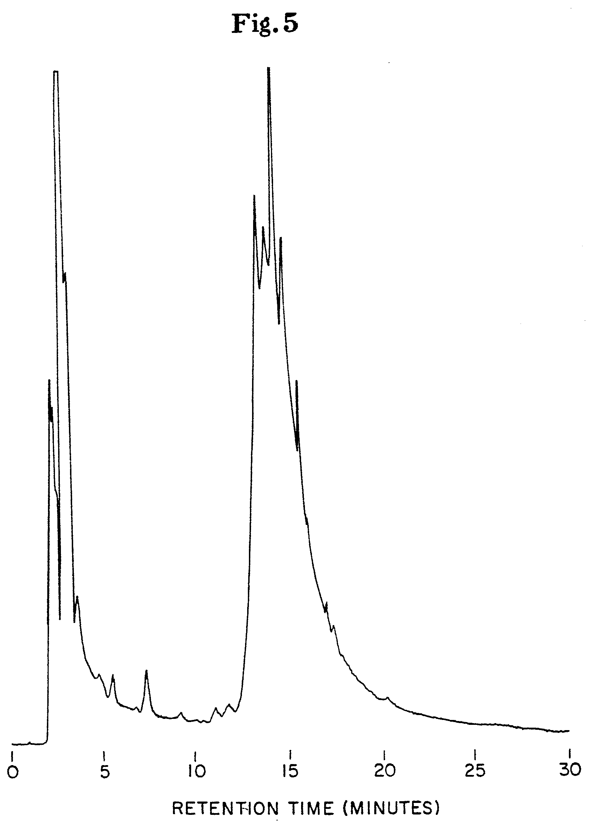

The polyphenolic profile of the claimed liquid tea mix concentrate is distinct from other liquid tea mix concentrates and is more like that of tea. Figures 4, 5, 6 and 7 are traces of high pressure, liquid chromatograms of the claimed concentrate diluted 1:1 with water, a representative commercially available competitive product diluted 1:1 with water, the claimed product undiluted, and dehydrated tea diluted 1:1 with water, respectively. A comparison of Figures 4 and 5 illustrates that the level of theaflavins and thearubigins in the claimed product is lower than in conventional liquid tea mix concentrates. Theaflavins and thearubigins are polyphenolic compounds generally referred to as tea tannins. Theaflavins are believed to give black tea its flavor. Thearubigin-caffeine complexes are less soluble in water, and cause turbidity and sediment in tea products and beverages prepared therefrom. Therefore, the lower level of thearubigins in the claimed product is advantageous in reducing or preventing turbidity or physical phase separation in tea beverages prepared from the product.

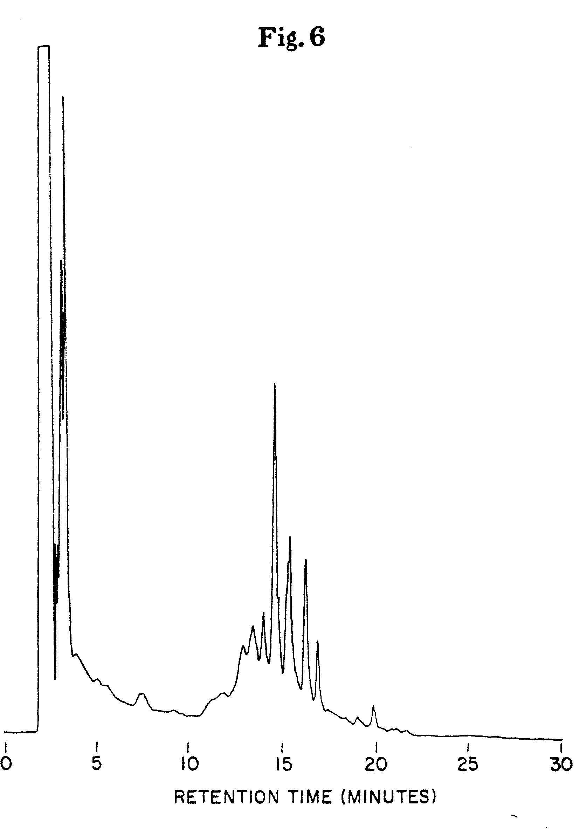

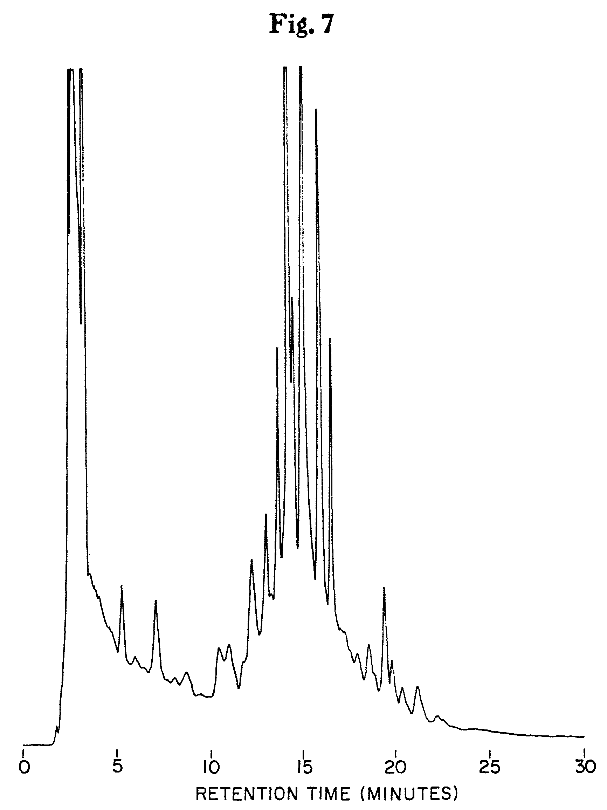

A comparison of Figures 6 and 7 illustrates that a sufficient level of theaflavin and thearubigin are retained for the product to retain the character and flavor of fresh brewed tea. The chromatogram of the claimed concentrate, Figure 6, shows resolution of peaks corresponding to the theaflavin and thearubigin components of the tea. The chromatogram of the tea extract, Figure 7, shows a similar resolution of peaks corresponding to these components. Figure 5 for the typical commercially available product shows that it is different because the peaks representing these components are not resolved. Other additional components are present. The claimed product has a ratio of thearubigins to theaflavins similar to liquid tea concentrates. This ratio for commercially available liquid tea mix concentrates cannot be calculated because the products do not contain tea and therefore contain undetectable levels of theaflavin.

The liquid tea mix concentrate of the present invention has a molecular weight distribution distinct from that of other conventional similar products. The high molecular weight component distribution is distinct from that of other available liquid tea mix concentrates. The low molecular weight components comprise primarily sugars for all mix products.

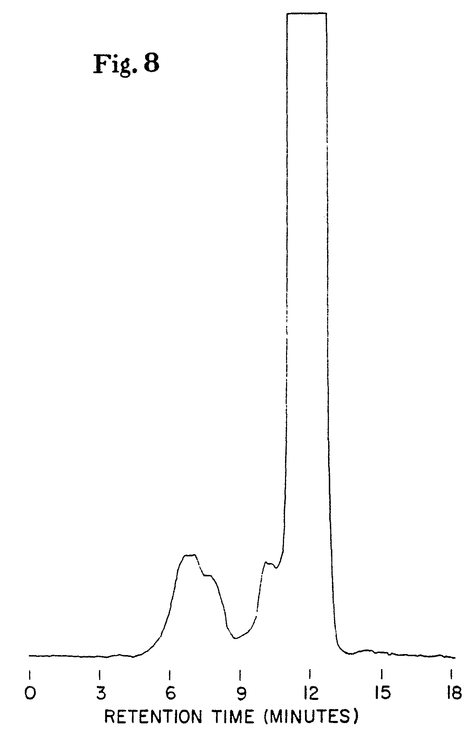

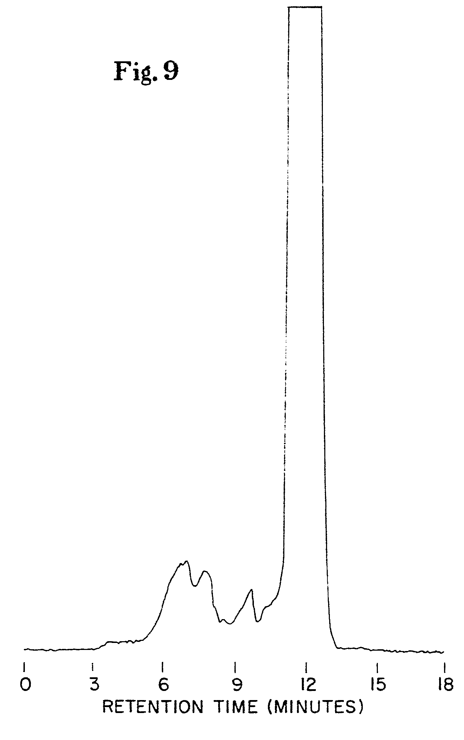

Figure 8 illustrates a liquid size-exclusion chromatogram for the liquid tea mix concentrate of the present invention for sizing of molecular components. The species exit the columns in order from highest to lowest molecular weights. Thus, the species with the highest molecular weights exit the columns first and appear at the left side of Figure 8. Species with the lower molecular weights exit the columns last and appear on the right side of Figure 8. Figure 9 illustrates a liquid size-exclusion chromatogram for a typical commercially available liquid tea mix concentrate. A comparison of the high molecular weight portion of the chromatograms demonstrates that the claimed concentrate is distinct from other liquid tea mix concentrates.

A tea beverage for consumption is prepared by diluting the liquid tea mix concentrate with water. This beverage is stable both in terms of flavor and appearance during refrigeration. The development of off-flavors and off-aromas is prevented because the beverage is substantially free of sulfur components. The appearance remains clear and the beverage is stable to physical phase separation due to the low levels of thearubigins. Precipitates which would cause a turbid appearance do not separate from the beverage. Turbidity measurements for the beverage of the present invention after refrigerated storage for 3 to 10 days ranges up to about 13 nephelometric turbidity units (hereinafter

NTU), preferably less than 10 NTU. Beverages prepared from conventional liquid tea mix concentrates have turbidity measurements of from about 30 to about 40 after refrigerated storage for 3 to 10 days. Beverages prepared from conventional granular instant teas have turbidity measurements of from about 40 to about 140 after refrigerated storage for 3 to 10 days.

The flavor stability of the beverage has been confirmed by expert taste panelists who found a greater degree of difference between the taste of tea beverage prepared from the concentrate of the present invention and that prepared from conventional liquid tea mix concentrates. The tea beverage of the present invention has a maximum degree of difference of about 0.5, typically about 0.4 when prepared from concentrate aged for two weeks if compared to beverage freshly prepared from the same concentrate stored at 0°F (-18°C). The degree of difference of conventional tea beverages is from about 0.8 to about 1.2 when prepared from product aged for two weeks if compared to beverage freshly prepared from the same concentrate stored at 0°F (-18°C).

The characteristics of the liquid tea mix concentrate produced by the process herein, and of the tea beverage prepared from it, are summarized in Table I. All percents are by weight unless otherwise stated.

-11-

## Table I

### Liquid Tea Mix Concentrate

| | |
|---|---|
| pH | maximum of 3.0 |
| $A_w$ | maximum of 0.85 at 24°C |
| Total solids | minimum of 55% |
| Sulfur | maximum of 0.005% |

### Tea Beverage

| | |
|---|---|
| Turbidity | maximum of 13 NTU |
| Flavor stability, degree of difference | maximum of 0.5 |

It can be appreciated that other embodiments or executions of this invention can be devised without departing from the scope and spirit of the invention, and without losing its advantages. In particular, a liquid tea mix concentrate from which degradation reaction products have been removed during processing is shelf-stable with regard to the development of off-flavors, malodorous odors, and precipitates upon aging. Tea beverage prepared from such a product is stable when refrigerated in flavor, aroma, and clarity.

## Testing and Evaluation

The following tests were performed on the liquid tea mix concentrate of the present invention.

### A. pH

A Beckman Model 3500 Digital pH Meter (Beckman Instrument, Inc., Fullerton, CA 92634) was used to measure the pH of the liquid products and all of the tea beverages. The pH meter was calibrated with standard buffer solutions at pH 4, 7, and 10 (available from Curtin Matheson Scientific, Inc., Cincinnati, OH) before the samples were measured. Three different samples from each product were measured and then averaged. Tea beverages were prepared by dilution with tap water according to the instructions on the product package.

## B.    Water Activity

A Rotronic Hygroskop DT water activity system, available from Rotronic AG, Zurich, Switzerland, imported by Kaymont Instrument Corporation, P.O. Box 348, Huntington Station, N.Y. 11746, was used to measure the water activity of the liquid products.    The temperature of the measuring stations and the products were controlled and regulated at 24°C by a water bath, Thermomix 1420 BKU, available from B. Braun Instruments, South San Francisco, CA.    The Hygroskop DT system was calibrated with standard solutions provided by Rotronic AG.

The liquid concentrate was placed in the plastic sample container of the Hygroskop DT system and the container placed in the measuring station.    After fifteen minutes for equilibration, the temperature and water activity of the sample were recorded. These readings were repeated every ten minutes until a constant value was obtained.    Three different samples from each liquid product were measured and averaged.

## C.    Volatile Sulfur

Relative levels of volatile sulfur compounds in the solutions of dehydrated tea extract, citric acid, and distilled water, were measured using gas chromatography.    In this technique a suitable sample was injected into a heated injection port where volatile materials were vaporized.    The volatile compounds were swept through a chromatographic column where resolution of the components occurred.

The components eluted from the column into a flame photometric detector.    Compounds containing sulfur underwent decomposition reactions in the flame.    The products of these reactions were thermally excited and generated an optical emission.    This emission was focussed, filtered of any extraneous radiation and converted into an electrical signal by the flame photometric detector.    The electrical signal was proportional to the levels of the volatile sulfur compounds in the sample.

A Hewlett-Packard gas chromatograph (Model 5880) equipped with a Hewlett-Packard flame photometric detector and Hewlett-Packard recording integrator (Level IV), each available from Hewlett-Packard, 1820 Embarcadero Rd., Palo Alto, CA 94303, were used. Gas flow rates for the detector were as follows: $O_2$-40 ml./min., $H_2$-75 ml./min., air-50 ml./min., and $N_2$-30 ml./min.

The injector temperature was maintained at 280°C, the detector temperature at 280°C, and the auxiliary temperature of the flame photometer detector at 200°C.

The instrument was operated at a split flow of 60 ml./min. and column head pressure of approximately 10 psi, yielding a column flow rate 2.7 ml./min. A DB-1701 fused silica capillary column (30 meters, 0.32 mm. I.D., 1 micron coating), available from J&W Scientific Inc., Rancho Cordova, CA, was used.

The sample size varied from 0.5 microliter to 1.0 microliter. Elution of the sample was accomplished with an oven temperature profile of 40°C for 1.5 min. to 260°C at 10°C/min.

D. Total Sulfur

Total sulfur was determined using the method described in Official Methods of the Association of Official Analytical Chemists, 13th ed., sections 3.062, 3.063, AOAC, Washington, D.C. (1980).

E. Polyphenolics

The liquid tea mix concentrates were analyzed using a modification of the high pressure liquid chromatography procedure described by Roberts et al., Journal of Food Science and Technology, Vol. 18, 1981, for tea polyphenolics.

A duPont (Model 8800) liquid chromatographic system, available from the duPont Company, Analytical Instrument Division, Wilmington, DE 19898, with a variable wavelength ultra-violet spectrophotometric detector set at 380 nm, and a Spectra-Physics recording integrator (Model 4100), available from Spectra-Physics, 3333 N. First St., San Jose, CA 95134, were used.

A binary mobile phase system was employed. Mobile phase A consisted of 79.8% Milli-Q water (water purified in a Milli-Q Purification Unit, available from Millipore Corp. of Bedford, MA), 20.0% acetone, and 0.2% glacial acetic acid. Mobile phase B consisted of 59.9% Milli-Q water, 39.9% acetone, and 0.2% glacial acetic acid.

The sample elution system consisted of 4 timed segments: 1) an isocratic segment of 100% mobile phase A for 5 minutes; 2) a linear gradient from 50% mobile phase A:50% mobile phase B to 0% mobile phase A:100% mobile phase B in 5 minutes; 3) an isocratic segment of 100% mobile phase B for 15 minutes; and 4) a linear gradient from 100% mobile phase B to 100% mobile phase A in 10 minutes.

The samples were prepared as follows:

For comparison of total polyphenolic levels (Figures 4 and 5) the liquid tea mix concentrates were diluted 1 part mix:1 part Milli-Q water, and were filtered through a 0.45 micron disposable filter. 0.25 ml. acetone was added to a 1 ml. aliquot of the filtered solutions and mixed by shaking.

For comparison of polyphenolic profiles (Figures 6 and 7) the sample of the claimed concentrate was filtered, undiluted, through a 0.45 micron disposable filter. To a 1 ml. aliquot of the filtered concentrate was added and mixed 0.15 ml. acetone.

Dehydrated tea extract was reconstituted by mixing with Milli-Q water at a level of 4% by weight. 2 ml. of the reconstituted tea solution was filtered through a 0.45 micron disposable filter. To a 1 ml. aliquot of this filtered solution was added and mixed 0.25 ml. acetone.

Fifty microliters of the samples prepared as above were injected onto a reverse phase column (duPont Zorbax ODS, 5 micron particle size, 4.6 millimeters × 25 centimeters) with a mobile phase flow rate of 1.0 ml./min. The spectrophotometric detector was operated at 0.08 absorbance units full scale for all samples except the tea extract for which it was operated at 0.16 absorbance units full scale.

F.    Molecular Weight Distribution

The molecular weight distribution of the liquid concentrates was determined using a Varian (Model 5000) Liquid Chromatograph, available from Varian, Walnut Creek, CA 94598, a Waters Differential Refractometer (Model B401), available from Waters Associates, Milford, MA 01759, and a Pedersen Strip Chart Recorder (Model 370 MR), available from Pedersen Instruments, Walnut Creek, CA 94598, with a duPont Zorbax PSM 60, 25 cm.

by 6.2 mm. SEC column (molecular weight range rated from $10^2$ to $10^4$. The mobile phase was Milli-Q water (water purified in a Milli-Q Purification Unit, available from Millipore Corp. of Bedford, MA) at a flow rate of 1.0 ml./min. The retention time of the peaks indicates the relative molecular weight of the soluble components in the liquid tea concentrates. Longer retention times correspond to lower molecular weights.

Samples were prepared for analysis by making a dilution (1 part concentrate + 4 parts water) and filtering through a 0.45 micron disposable Nylon-66 filter unit (available from Rainin Instrument Co., Woburn, MA). Samples of 20 microliters each were injected into the chromatograph. Detector attenuation was set at 4. Recorder chart speed was set at 20 in./hr.

Peak height is related to the quantity of the molecular weight species. A specific peak does not necessarily represent a single component, but instead represents the cumulative amount of components with similar molecular weights.

G.   Total Solids

Total solids for the liquid concentrates was measured using a Digital Refractometer, Model Abbe Mark II, available from A. O. Scientific Instruments of Buffalo, New York. Total solids was calculated from the refractive index readings using calibration curves for tea extract and for acidified extract.

The following tests were performed on tea beverage prepared by diluting the liquid tea mix concentrate of the present invention with water in a ratio of 1 to 7.

A.   Turbidity

The nephelometric method and nephelometric turbidity unit, as described in "Standard Methods for the Examination of Water and Waste Water", 14th ed., published by American Public Health Association, Washington, D.C., were used to determine the cloudiness or turbidity of the tea beverages. A Hach Ratio Turbidimeter, Model 18900-00, available from Hach Chemical Company, Loveland, Col., was employed. It was calibrated prior to each measurement using Latex Standard solutions provided by Hach Chemical Company. For the refrigerated beverages, the turbidity was measured at the refrigerated temperature. Three different samples from each beverage were measured and averaged.

B.  Expert Taste Panel

Tea beverages were prepared from products prepared by the process of the present invention by diluting 1:7 with water. Tea beverages were prepared from the commercially available products according to the package instructions. All beverages were chilled to 40°F.

In order to evaluate the stability of the liquid concentrates, each product was stored at both 0°F (-18°C) and 120°F (49°C). Beverages were prepared from each and evaluated by the panelists. The beverage made from the product stored at 0°F was used as the standard and the other beverage compared to it.

To evaluate the stability of the tea beverages, freshly prepared beverage was used as the standard and was compared against the same beverage refrigerated for 3 to 10 days. The differences between the standard and compared beverages represented the effect of aging on the flavor and aroma.

The panelists would taste both beverages, evaluate their difference and assign a score of degree of difference (D.O.D.). The scale defining the D.O.D. for the flavor evaluation are listed in Table II. The D.O.D. values of all the panelists for each product were averaged. A lower degree of difference determined by the panel correlates with increased similarity of the products tested.

## Table II

| Numerical Value | Evaluation of Degree of Difference |
|---|---|
| 0.2 | The flavor of the test sample is not distinguishable from the flavor of the standard. |
| 0.3 | The flavor of the test sample is very close to the flavor of the standard, and it is difficult to distinguish from the standard. |
| 0.5 | The flavor of the test sample is slightly different from the flavor of the standard. |
| 0.8 | The flavor of the test sample is moderately different from the flavor of the standard. |
| 1.2 | This test sample is very different in flavor from the standard. |

The following examples are specific embodiments of the present invention but are not intended to limit it. All percentages are by weight unless otherwise stated.

### Example 1

Four hundred pounds of distilled water were placed in a steam jacketed stainless steel tank (150 gallons capacity, Model PZ-K, Walker Stainless Steel, Wisconsin). The agitating paddles in the tank were turned on and the distilled water was heated to 170°F (77°C). Twenty-six pounds of dehydrated tea powder (India 101, Tritea Company) were dissolved in the hot water. Seventy-four pounds of anhydrous citric acid granules (Miles Laboratories, Inc.) were dissolved in the hot tea solution. The tea-acid solution was kept at 170°F (77°C) for one hour with continuous agitation.

Then a vacuum was applied to the tank while the solution temperature was maintained at 170°F (77°C). The solution boiled and flashed. The vacuum in the tank was kept at 14 inches of Hg. After one hour, the heating was turned off. The vacuum was increased to 27 inches of Hg and evacuation lasted for another two hours. The solution bubbled and boiled continuously. Its temperature dropped gradually to 66°F (19°C). When solution temperature reached 66°F (19°C), the vacuum was stopped.

Three hundred and fifty pounds of tea-acid solution were retrieved from the heating tank. To this solution four hundred lbs. of distilled water were added. The diluted solution was stored in 34°F (1°C) room overnight (about 18 hours). The chilled solution was centrifuged with a West Falia Separator (type SA14-47-076; rpm of bowl, 7560). The solution temperature before centrifuge was 34°F (1°C), and after centrifuge was 40°F (4°C). The clarified solution was stored at 34°F (1°C).

The stabilized tea-acid solution was blended with high fructose corn syrup, distilled water, lemon, and other natural flavors. A Lightnin Mixer (Model ND-1A, 1/4 HP, 1725 rpm) was used to blend all the ingredients for one hour at ambient temperature and pressure. The concentrate was packed into sterile containers.

The resulting liquid tea mix concentrate had a sulfur content of .003% by weight, pH of 2.5, and water activity of 0.81 at 24°C, a total solids content of 61% by weight, and a ratio of thearubigins to theaflavins of about 50. A tea beverage was prepared by diluting the concentrate 1:7 with water had a turbidity of 7 NTU after 5 days of refrigerated storage and a turbidity of 8 NTU, after 10 days of refrigerated storage. Expert taste panelists evaluated the beverage and found a degree of difference of less than 0.5 when compared to the freshly prepared beverage diluted from the concentrate stored at 0°F (-18°C).

## Example 2

A liquid tea mix concentrate prepared as in Example 1 and several commercially available tea products were analyzed for total sulfur, pH, water activity, and total solids, according to the methods previously described. The resulting data are summarized in Tables III and IV. Those products containing sweetener and flavoring are denoted as tea mixes and data are summarized in Table III. Those containing neither sweetener nor flavoring are denoted as teas and data are summarized in Table IV. Beverages were prepared by diluting these products with water and turbidity was measured using the method previously described. The resulting data are included in Tables III and IV.

Table III

Liquid Tea Mix Concentrates

| Product | Sulfur, % | pH | $A_w$ at 24°C | Total Solids,% | Beverage Turbidity, NTU |
|---------|-----------|-----|---------------|----------------|--------------------------|
| Claimed tea mix | .003 | 2.5 | 0.81 | 62 | 10 |
| Commercial tea mix A* | .016 | 3.4 | 0.95 | 36 | 30 |

*Commercial tea mix A contains no tea, but instead tea essence. No liquid tea mix products containing tea are currently available commercially.

Table IV

Liquid Tea Concentrates

| Product | Sulfur, % | pH | $A_w$ at 24°C | Total Solids,% | Beverage Turbidity, NTU |
|---------|-----------|-----|---------------|----------------|--------------------------|
| Commercial tea B (sweetened) | .015 | 4.8 | 0.90 | 56 | 14 |
| Commercial tea C | .006 | 4.3 | 0.97 | 1.9 | 19 |
| Commercial tea D | .006 | 4.1 | 0.97 | 1.7 | 38 |
| Commercial tea E | .022 | 4.6 | 0.97 | 3.0 | 16 |

Beverages were prepared by diluting the claimed and commercially available products with water and stored under

-20-

refrigeration at 40°F (4°C) for 10 days. Turbidity was measured periodically using the method previously described. The resulting data are summarized in Table V.

Table V

Tea Beverages

| Product | Turbidity, NTU | | | | | |
|---|---|---|---|---|---|---|
| | Initial | 3 days | 4 days | 5 days | 6 days | 10 days |
| Claimed tea mix | 6 | 7 | 7 | 7 | 7 | 8 |
| Claimed tea mix | 13 | 13 | 13 | 12 | 13 | 13 |
| Claimed tea mix- voldtiles not removed | 61 | 85 | 114 | 109 | 118 | 113 |
| Commercial liquid tea mix A | 30 | 32 | 35 | 36 | 36 | 38 |
| Commercial granular tea mix F | 87 | 88 | 158 | 130 | 136 | 130 |
| Commercial granular tea mix G | 42 | 46 | 81 | 82 | 100 | 136 |

Example 3

A liquid tea mix concentrate prepared as in Example 1 was packed into bottles and subjected to the following tests for shelf stability.

The microbial counts in half of the bottles were measured right away. Both the total plate counts and mold counts were very low, around 50 counts/gram. After five days stored at room temperature, the counts in the same bottles dropped below 10. The other half of the bottles were stored and incubated at 90°F

0162526

-21-

(32°C) for two weeks. Their microbial counts were then measured and all found to be less than 10.

In a second experiment, molds and spores were intentionally added to liquid tea mix concentrate prepared as in Example 1 to attain an initial count of 10,000. After the contaminated product was stored at room temperature overnight, the counts dropped to 100. After five days, the counts dropped to 10.

In a third experiment, a home use situation was simulated where concentrate prepared as in Example 1 might be contaminated in different ways. A sample was touched and stirred with a person's finger. Another sample was poured into a dirty cup with some tap water. The product was repoured back into the original container. A third sample was mixed with a small amount of human saliva. All the samples were then stored in the refrigerator for three days. Their microbial counts were found to be less than 20.

In a fourth experiment, concentrate prepared as in Example 1 was placed in cans which were "cleaned" by blowing air into them but were not sterilized. The initial microbial counts were 1000 but after five days at room temperature, all the counts dropped to less than 20.

The samples from the above tests were stored at 70°F (21°C). After two months all samples have a total microbial count of less than 20.

## Example 4

A liquid tea mix concentrate containing 0.5% tea was prepared as in Example 1. A liquid tea mix concentrate containing 0.5% tea was prepared by mixing tea, water, sweetener, and flavoring. No acidification, heating or removal of volatiles was conducted on the latter sample. The concentrates were stored at constant temperature. Tea beverages were prepared by diluting each concentrate 1:7 with water and were evaluated by expert flavor panelists. The degree of flavor difference was evaluated for each sample compared to beverage prepared from samples of the same concentrate stored at 0°F (-18°C). The resulting data are summarized in Table VI. A

larger degree of difference indicates a larger difference in flavor due to aging. A degree of difference greater than about 0.5 indicates in general a detectable off-flavor in the beverage. This example was repeated with a liquid tea mix concentrate containing 0.1% by weight tea. Data are summarized in Table VII.

Table VI

| Age, Weeks | Temperature °C | Degree of Difference | Comments |
|---|---|---|---|
| Concentrate prepared by mixing | | | |
| 1 | 4°C | 0.3 | |
| | 21°C | 0.5 | |
| | 49°C | 0.8 | fermented off-flavor |
| Concentrate prepared as in Example 1 | | | |
| 1 | 4°C | 0.3 | |
| | 49°C | 0.5 | not as fresh |
| 2 | 4°C | 0.3 | |
| | 49°C | 0.5 | not as fresh |
| 3 | 4°C | 0.3 | |
| | 49°C | 0.5 | not as fresh |
| 4 | 4°C | 0.3 | |
| | 49°C | 0.5 | not as fresh |
| 5 | 4°C | 0.3 | |
| | 49°C | 0.5 | not as fresh |

0162526

## Table VII

| Age, Weeks | Temperature °C | Degree of Difference | Comments |
|---|---|---|---|
| Concentrate prepared by mixing | | | |
| 1 | 49°C | 0.5 | slightly fermented |
| 2 | 49°C | 0.8 | fermented |
| 3 | 49°C | 0.8 | fermented |
| Concentrate prepared as in Example 1 | | | |
| 1 | 21°C | 0.3 | no fermented flavor |
|   | 49°C | 0.5 | not as fresh |
| 2 | 49°C | 0.5 | no fermented flavor |
| 3 | 49°C | 0.5 | no fermented flavor |

CLAIMS

1. A shelf-stable tea mix concentrate comprising :
   a) from about 0.05% to about 40% by weight tea;
   b) from about 0.05% to about 40% by weight acid;
   c) from about 0.5% to about 90% by weight sweetener;
   d) water and flavorings in an amount sufficient to make up to 100% by weight;
   said shelf-stable concentrate containing no preservatives and a maximum sulfur content of 0.005% by weight.

2. The concentrate of Claim 1 wherein the pH is a maximum of about 3.0.

3. The concentrate of Claim 2 wherein the water activity at 24°C is from about 0.75 to about 0.85.

4. The concentrate of Claim 3 wherein the total solids is a minimum of about 55% by weight.

5. The concentrate of Claim 1 wherein the acid comprises an organic acid selected from the group consisting of fumaric, citric, malic, acetic, lactic, propanoic, adipic, tartaric, and succinic.

6. The concentrate of Claim 1 wherein the acid comprises an inorganic acid selected from the group consisting of phosphoric, carbonic, hydrochloric, and sodium hydrogen phosphate.

7. The concentrate of Claim 1 wherein the sweetener comprises monosaccharides, disaccharides, polysaccharides or a mixture thereof.

8. The composition of Claim 1 wherein the sweetener comprises an artificial sweetener.

9. The concentrate of Claim 1 wherein the flavoring comprises lemon.

10. A shelf-stable liquid tea mix concentrate comprising :
    a) from about 0.05% to about 40% by weight tea;
    b) from about 0.05% to about 40% by weight acid;
    c) from about 0.5% to about 90% by weight sweetener;
    d) water and flavorings in an amount sufficient to make up to 100% by weight;
    said shelf-stable concentrate containing no preservatives, having a maximum pH of about 3.0, and having a maximum sulfur content of 0.005% by weight.

11. A process for the preparation of a tea beverage for consumption comprising diluting the liquid tea mix concentrate of Claim 1 with water in a ratio of about 1:7.

12. A tea beverage prepared by diluting the liquid tea mix concentrate of Claim 1 with water in a ratio of about 1:7.

13. The beverage of Claim 12 wherein the turbidity is a maximum of about 13 NTU after refrigerated storage for 10 days.

14. The beverage of Claim 12 the flavor degree of difference after 2 weeks refrigerated storage is a maximum of 0.5.

4196E

## Fig. 1

RETENTION TIME (MINUTES)

## Fig. 2

RETENTION TIME (MINUTES)

## Fig. 3

RETENTION TIME (MINUTES)

0162526

Fig. 4

RETENTION TIME (MINUTES)

Fig.5

RETENTION TIME (MINUTES)

## Fig. 6

RETENTION TIME (MINUTES)

0162526

Fig. 7

RETENTION TIME (MINUTES)

6/7

Fig. 8

RETENTION TIME (MINUTES)

Fig. 9

RETENTION TIME (MINUTES)